# EUROPEAN PATENT SPECIFICATION

(11) **EP 0 713 821 B1**
(45) Date of publication and mention of the grant of the patent: **18.08.2004**
(21) Application number: 95118082.7
(22) Date of filing: 16.11.1995
(51) Int. Cl.: B62D 5/06

(54) **Power steering device**
Servolenkung
Direction assistée

(30) Priority: 22.11.1994 JP 28843694
(43) Date of publication of application: 29.05.1996
(73) Proprietor: KOYO SEIKO CO., LTD., Osaka 542-0081 (JP)
(72) Inventor: Nakano, Shiro, c/o Koyo Seiko Co., Ltd., Osaka 542 (JP)
(74) Representative: Bohnenberger, Johannes, Dr.

(56) References cited:
- WO-A-92/00215
- DE-A- 3 536 563
- PATENT ABSTRACTS OF JAPAN vol. 008, no. 164 (M-313), 28 July 1984 & JP 59 059572 A (TOYODA KOKI KK), 5 April 1984,

## Description

The present invention relates to a power steering device according to the preamble of claim 1.

A power steering device for assisting in steering by rotating an oil pump with the use of a motor to supply hydraulic fluid to a power cylinder has been known.

This type of power steering device is disclosed in Japanese Examined Patent Publication No. 64-10391/1989, Japanese Examined Patent Publication No. 1-30667/1989 or Japanese Unexamined Patent Publication No. 56-99859/1981.

In any one of the conventional power steering devices of this type, such construction as to control the number of revolutions of a motor for driving a pump motor depending on the speed of a vehicle has been employed.

Therefore, the power steering device must be so constructed that a speed signal from a speed detector is fed thereto, whereby the power steering device itself cannot be manufactured as a conventionally independent vehicle part whose control signal system is arranged in a closed loop.

DE-A-353 65 63 discloses a power steering device according to the preamble of claim 1, wherein the speed of the motor can be switched mechanically between three different predetermined speeds. In particular, there are provided electrical strip conductors on the outside of a rotating sleeve and sliding contacts contacting the strip conductors in order to switch the speed of the motor over an electrical circuitry. Therefore, the sleeve is coupled mechanically to the steering wheel and rotates in accordance to the rotation of the steering wheel. Through the rotation of the sleeve, the strip conductors are moved relatively to the sliding contacts, so that the electrical supply of the motor is switched between different lines and/or resistors of the electrical circuitry to control the speed of the motor.

However, it is hardly possible to change the thresholds of the switching of the motor speed, because therefore, at least the arrangement of the strip conductors on the sleeve has to be replaced and/or changed.

In light of the above it is, one object of the invention to improve the subject-matter known from DE-A-353 65 63 in that the thresholds of the switching of the motor speed can easily be changed without any constructional change.

Another object is to provide a power steering device to be incorporated into a steering mechanism which can be manufactured as a unit which does not cooperate with but is conctructively independent of vehicle parts other than a steering mechanism.

A further object of the present invention is to provide a power steering device which is high in reliability and in which a required steering force for assisting in steering is obtained only when required.

Still another object of the present invention is to provide a power steering device which can be manufactured at low cost as a whole by using low-cost parts as components and is high in reliability.

These objects are overcome by the power-steering device with the features of present claim 1.

In a second mode, the present invention is characterized in that the running state signal comprises a torque signal detected when torque is applied to a steering shaft from a steering wheel.

In a third mode, the present invention is characterized in that the running state signal comprises a signal outputted when a predetermined relative angle of rotation is formed between an input axis on the side of the steering wheel and an output axis on the side of the wheels which are connected to each other by a torsion bar.

In a fourth mode, the present invention is characterized in that the running state signal comprises a pressure signal outputted in proportion to the pressure of the hydraulic fluid supplied to the power cylinder upon detection of the pressure.

According to the above-mentioned modes, a signal for controlling the number of revolutions of the oil pump motor is obtained on the basis of an output of means provided in the steering mechanism for outputting the running state signal corresponding to the vehicle running state, for example, a torque sensor, a relative angle of rotation between the input axis and the output axis in the steering mechanism which are connected to each other by the torsion bar, the pressure of the hydraulic fluid in the power cylinder, or the like. The number of revolutions of the oil pump motor can be controlled by the signal. Accordingly, a control system in the power steering device can be constructed in a closed loop in the steering mechanism.

As a result, there can be provided a power steering device which can be satisfactorily mounted on a steering mechanism and can produce the most suitable force for assisting in steering only by a signal from the steering mechanism without requiring a control signal from the other vehicle part.

According to the invention, a control circuit of the oil pump motor can be produced in so-called hardware construction using low-cost and reliable electric/electronic parts. As a result, it is possible to provide a power steering device resisting vibration and noise which are produced in a vehicle and being high in reliability. Further, it is possible to manufacture the power steering device at low cost.

The foregoing and other objects, features, aspects and advantages of the present invention will become more apparent from the following detailed description of the present invention when taken in conjunction with the accompanying drawings.

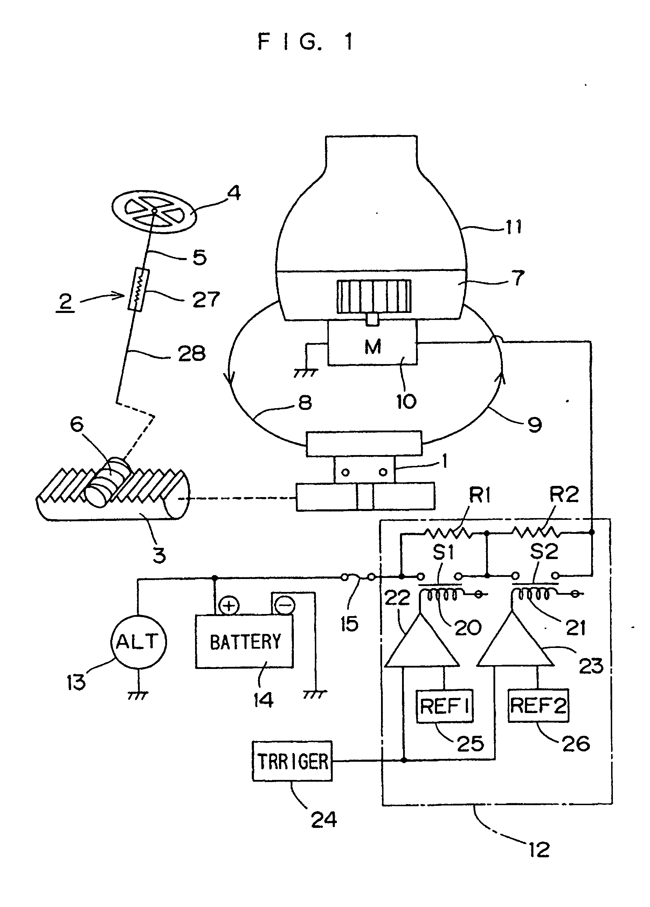

Fig. 1 is a schematic diagram showing the entire construction of a power steering device according to one embodiment of the present invention; and

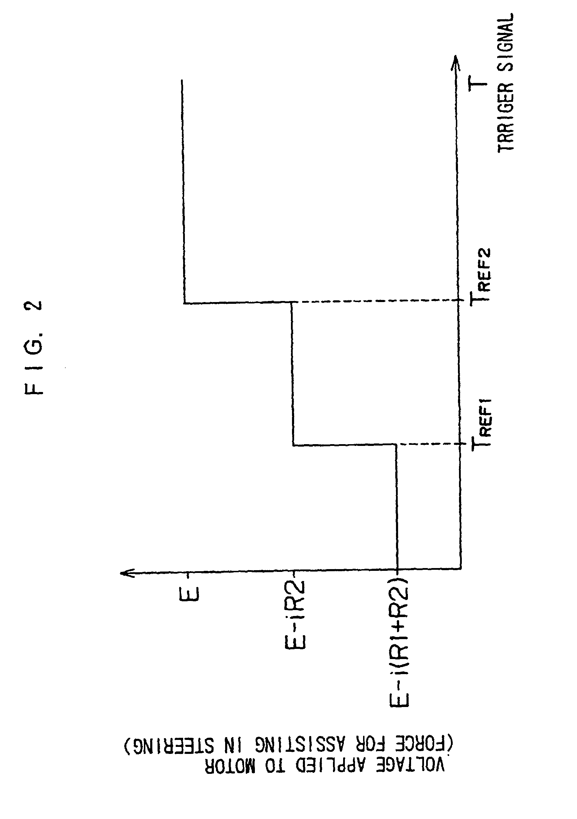

Fig. 2 is a graph showing the relationship between a trigger signal and a voltage applied to a motor in a power steering device according to one embodiment of the present invention. Fig. 1 is a schematic diagram showing the entire construction of a power steering device according to one embodiment of the present invention. Referring now to Fig. 1, the entire construction of the power steering device according to the present embodiment will be described.

A power steering device comprises a power cylinder 1. The power cylinder 1 is connected to the axis of a rack 3 included in a steering mechanism 2, for example. When torque is applied to a steering shaft 5 by a steering wheel 4, and the rack 3 is moved rightward and leftward by a pinion 6 to perform steering, the power cylinder 1 so functions as to assist in moving the rack 3. That is, the power cylinder 1 produces a force for assisting at the time of steering in synchronism with the steering wheel 4.

The power cylinder 1 is driven by hydraulic fluid supplied from an oil pump 7. Specifically, the power cylinder 1 introduces the hydraulic fluid supplied from the oil pump 7 into either one of right and left cylinder chambers by changing the opening of a control bulb (not shown). An oil supplying path 8 and an oil reducing path 9 are provided, as conceptually illustrated, between the oil pump 7 and the power cylinder 1. A motor 10 for driving the pump 7 is connected to the oil pump 7. In the present embodiment, the oil pump 7 and the motor 10 are contained in an integrally formed housing, and the oil pump 7 and the motor 10 are integrally constructed. Further, the oil pump 7 comprises a reserve tank 11. Preliminary hydraulic fluid is always stored in the reserve tank 11.

A driving control circuit 12 is connected to the motor 10, and the number of revolutions of the motor 10 is controlled by the driving control circuit 12. A DC voltage of 12 V, for example, is applied as a driving voltage to the driving control circuit 12 via a fuse 15 from an alternator 13 and/or a buttery 14. The applied DC voltage is applied as a driving voltage to the motor 10 via a series circuit of resistors R1 and R2. The resistors R1 and R2 are set to values sufficiently larger than a resistance value of the motor 10 (the resistance value of an armature), and the voltage applied to the motor 10 via the series circuit of the resistors R1 and R2 is so set to be a very small voltage.

A first switch S1 is provided in parallel with the resistor R1, and a second switch S2 is provided in parallel with the resistor R2. A first relay 20 for opening or closing the first switch S1 is provided in relation to the first switch S1, and a second relay 21 for opening or closing the second switch S2 is similarly provided in relation to the second switch S2. Each of the relays 20 and 21 closes the corresponding first switch S1 or second switch S2 in its excited state, while opening the corresponding switch in its non-excited state.

The driving voltage applied to the motor 10 from the driving control circuit 12 is switched in four steps, for example, by opening or losing the first switch and/or the second switch S2.

It is assumed that the values of the resistors R1 and R2 are set to different values. Letting r, E and i be respectively the resistance value of an armature, a battery voltage and the value of a current flowing from the driving control circuit 12 to the motor 10, a control voltage ir applied to the motor 10 is changed as follows by the opening or closing the first switch S1 and/or the second switch S2:
S1 is opened and S2 is opened : ir = E - i (R1 + R2)
S1 is opened and S2 is closed : ir = E - iR1
S1 is closed and S2 is opened : ir = E - iR2
S1 is closed and S2 is closed : ir = E

The driving control circuit 12 further comprises a first comparator 22 for switching excited/non-excited states of the first relay 20 and a second comparator 23 for switching excited/non-excited states of the second relay 21. A trigger signal from a trigger signal output device 24 is fed to each of the comparators 22 and 23.

The first comparator 22 compares the fed trigger signal with a first reference value given from a first reference value producing circuit 25, to output a signal to excite the first relay 20 when the first reference value ≦ the trigger signal, while outputting a non-excitation signal in the other cases.

On the other hand, the second comparator 23 compares the fed trigger signal with a second reference value given from a second reference value producing circuit 26, to output a signal to excite the second relay 21 when the second reference value ≦ the trigger signal, while outputting a non-excitation signal in the other cases.

Letting T, T_{REF1} and T_{REF2} (where T_{REF1} < T_{REF2}) be respectively the value of the trigger signal, the first reference value and the second reference value, the respective opened or closed states of the first switch S1 and the second switch S2 are switched as follows depending on the value T of the trigger signal:
T < T_{REF1} : S1 is opened and S2 is opened
T_{REF1} ≦ T < T_{REF2} : S1 is closed and S2 is opened
T_{REF2} ≦ T : S1 is closed and S2 is closed

The relationship between the value T of the trigger signal fed to the driving control circuit 12 from the trigger signal output device 24 and a voltage applied to the motor 10 controlled by the driving control circuit 12 (that is, the number of revolutions of the motor 10, which is also referred to as a force for assisting in steering at the time of steering) becomes the relationship as shown in Fig. 2.

As shown in Fig. 2, the voltage applied to the motor 10 is controlled in three steps as the value T of the trigger signal increases. Specifically, when the value T of the trigger signal is less than the first reference value T_{REF1}, the voltage applied to the motor 10 is controlled to be E - i (R1 + R2) , and the number of revolutions of the motor 10 is relatively low. When the value T of the trigger signal is T_{REF1} ≦ T < T_{REF2} , the voltage applied to the motor 10 is controlled to be E - iR2, and the number of revolutions of the motor 10 is medium. Further, in a state where the value T of the trigger signal is not less than the second reference value T_{REF2}, E which is equivalent to an output voltage of the buttery 14 is applied to the motor 10, whereby the motor 10 rotates at relatively high speed.

A control voltage for controlling the number of revolutions of the motor 10 can be thus controlled step by step by the driving control circuit 12 of relatively simple hardware construction including the resistors R1 and R2, the switching elements S1 and S2, the relays 20 and 21, and the comparators 22 and 23. Since the driving control circuit 12 may be a simple circuit of hardware construction as described above, the driving control circuit 12 can be one resisting vibration and noise which frequently occur in a vehicle and being high in reliability.

Since the driving control circuit 12 can be constructed by simple electric parts or electronic parts, the necessity of high-cost electronic parts such as a CPU (Central Processing Unit) and software for driving the electronic parts as in the conventional power steering device is eliminated, whereby the power steering device can be constructed at low cost.

Furthermore, the voltage applied to the motor 10 is switched step by step in proportion to the value T of the trigger signal. If the power steering device is so adapted that a large value of the trigger signal is given when a force for assisting in steering is required, therefore, a large force for assisting in steering can be supplied when the large force for assisting in steering is required, while the voltage applied to the motor 10 is controlled when the large force for assisting in steering is not required. As a result, the power steering device can be one having a so-called energy saving effect.

Description is now made of a specific example of the trigger signal output circuit 24 for feeding the trigger signal to the driving control circuit 12.

As a typical example of the trigger signal output device 24, a torque sensor for detecting steering torque applied to the steering shaft 5 by the steering wheel 4 can be applied. To the torque sensor, a torque sensor of any type such as a torque sensor of a type having a mechanical contact composed of a potentiometer or the like (see, for example, Japanese Unexamined Patent Publication No. 3-74260/1991) and a non-contact type torque sensor developed by the applicant of the present invention (see Engineering Journal No. 137/1990) can be applied.

When a driver exerts a steering force to the steering wheel 4, the voltage applied to the motor 10, that is, the number of revolutions of the motor 10 can be gradually switched in proportion to the magnitude of the steering force by using the torque sensor as the trigger signal output device 24.

Furthermore, to the trigger signal output device 24, a detecting device for detecting a relative angle of rotation between an input axis 5 on the side of the steering wheel 4 and an output axis 28 on the side of the wheels which are connected to each other by a torsion bar 27 is applicable. The detecting device may detect the relative angle of rotation between the input axis 5 and the output axis 28, whereby the detecting device can be made simpler than the torque sensor.

As still another example of the trigger signal output device 24, a pressure sensor for detecting hydraulic pressure can be used. The pressure sensor is so arranged that it can detect the pressure of hydraulic fluid in the power cylinder 1. Specifically, in the power cylinder 1, the supply of the hydraulic fluid to the right cylinder chamber or the left cylinder chamber is controlled by changing the opening of a control valve as described above. The pressure of the hydraulic fluid in each of the cylinder chambers varies depending on the movement of the gear rack 3. Consequently, the pressure of the hydraulic fluid in the cylinder chamber may be always monitored to feed its pressure signal as a trigger signal to the driving control circuit 12.

The pressure sensor itself has been already known. Various pressure sensors which is high in sensitivity and grade for converting pressure into an electric signal and outputting the electric signal have been commercially available utilizing the piezoresistance effect, for example. The trigger signal output device 24 can be constructed by using such a commercially available pressure sensor as a pressure sensor of hydraulic fluid in the power cylinder 1.

Description was made by taking some specific examples of the trigger signal output device 24. As apparent from any one of the specific examples, however, the trigger signal output device 24 can be a detecting device which is provided in a steering mechanism for determining how the steering mechanism changes depending on the vehicle running state. If the detecting device provided in the steering mechanism is used as the trigger signal output device 24, a control signal system of the power steering device can be constructed in a closed loop in the power steering device and the steering mechanism. In other words, this means that a steering unit, on which the power steering device according to the present invention is mounted, can be constructed as a part whose control signal system is constructively independent of other vehicle parts. Consequently, it is easy to manufacture the steering unit with the power steering device, and it is possible to provide high versatility to produced articles.

In the above described embodiment, the driving control circuit 12 is provided with the series circuit of the two resistors R1 and R2, the two switches S1 and S2, the two relays 20 and 21 corresponding to the switches, the two comparators 22 and 23, and the two reference signal generating circuits 25 and 26.

In a case where the driving control circuit 12 is further simplified, however, the number of resistors, switches, relays, comparators and reference signal generating circuits may be respectively only one. In this case, the driving voltage applied to the motor 10 is switched in two steps.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A power steering device comprising a power cylinder (1) for assisting in steering in synchronism with a steering wheel (4), an oil pump (7) for supplying hydraulic fluid to the power cylinder (1) so as to drive said power cylinder (1), and a motor (10) for driving said oil pump (7), comprising:
means (24) for outputting a running state signal corresponding to a vehicle running state provided in a steering mechanism (2);
control means (12) for accepting said running state signal as a trigger signal and controlling the rotational speed or number of revolutions of said motor (10) in response to the trigger signal, wherein said control means (12) carries out control so that the rotational speed or number of revolutions of the motor (10) becomes a predetermined first speed or number of revolutions which is relatively low when the value of said fed running state signal is larger than a first reference value and smaller than a second reference value, while carrying out control so that the rotational speed or number of revolutions of the motor (10) is a predetermined second speed or number of revolutions which is relatively high when the value of the fed running state signal is larger than the second reference value;
said running state signal is a signal whose value varies depending on the vehicle running state,
**characterized in that**
said control means (12) comprises at least one reference value setting means (25, 26) for carrying out control so that the rotational speed or number of revolutions of the motor (10) becomes a predetermined value upon receipt of a running state signal whose value is larger than a set reference value;
said reference value setting means (25, 26) provided in said control means (12) comprises first reference value setting means (25) in which a relatively low first reference value is set and second reference value setting means (26) in which a relatively high second reference value is set.

2. The power steering device according to claim 1, **characterized in that**
said running state signal comprises a torque signal detected when torque is applied to a steering shaft (5) from the steering wheel (4).

3. The power steering device according to one of claims 1 or 2,
**characterized in that**
said running state signal comprises a signal output when a predetermined relative angle of rotation is formed between an input axis (5) on the side of the steering wheel (4) and an output axis (28) on the side of the wheels which are connected to each other by a torsion bar (27).

4. The power steering device according to any one of Claims 1 to 3, **characterized in that**
said running state signal comprises a pressure signal output in proportion to pressure of hydraulic fluid supplied to said power cylinder (1) upon detection of the pressure.

## Patentansprüche

1. Servolenkvorrichtung, die folgendes aufweist: einen Servozylinder (1), um das Lenken synchron mit einem Lenkrad (4) zu unterstützen, eine Ölpumpe (7) zum Zuführen von Hydraulikfluid zu dem Servozylinder (1), um den Servozylinder (1) anzutreiben, und einen Motor (10) zum Antreiben der Ölpumpe (7), wobei die Servolenkvorrichtung folgendes aufweist:
eine Einrichtung (24) zum Ausgeben eines einem Fahrzeugfahrzustand entsprechenden Fahrzustandssignals, die in einer Lenkeinrichtung (2) vorgesehen ist;
eine Steuereinrichtung (12) zum Akzeptieren des Fahrzustandssignals als ein Triggersignal und zum Steuern der Drehzahl oder Anzahl von Umdrehungen des Motors (10) in Abhängigkeit von dem Triggersignal, wobei die Steuereinrichtung (12) die Steuerung so ausführt, daß die Drehzahl oder Anzahl von Umdrehungen des Motors (10) eine vorbestimmte erste Drehzahl oder Anzahl von Umdrehungen wird, die relativ niedrig ist, wenn der Wert des zugeführten Fahrzustandssignals größer als ein erster Referenzwert und kleiner als ein zweiter Referenzwert ist, wogegen sie die Steuerung so ausführt, daß die Drehzahl oder Anzahl von Umdrehungen des Motors (10) eine vorbestimmte zweite Drehzahl oder Anzahl von Umdrehungen ist, die relativ hoch ist, wenn der Wert des zugeführten Fahrzustandssignals größer als der zweite Referenzwert ist;
wobei das Fahrzustandssignal ein Signal ist, dessen Wert sich in Abhängigkeit von dem Fahrzeugfahrzustand ändert,
**dadurch gekennzeichnet, daß**
die Steuereinrichtung (12) mindestens eine Referenzwert-Einstelleinrichtung (25, 26) aufweist, um die Steuerung so auszuführen, daß bei Empfang eines Fahrzustandssignals, dessen Wert größer als ein eingestellter Referenzwert ist,
die Drehzahl oder Anzahl von Umdrehungen des Motors (10) ein vorbestimmter Wert wird;
die in der Steuereinrichtung (12) vorgesehene Referenzwert-Einstelleinrichtung (25, 26) aufweist: eine erste Referenzwert-Einstelleinrichtung (25), in der ein relativ niedriger erster Referenzwert eingestellt ist, und eine zweite Referenzwert-Einstelleinrichtung (26), in der ein relativ hoher zweiter Referenzwert eingestellt ist.

2. Servolenkvorrichtung nach Anspruch 1,
**dadurch gekennzeichnet, daß**
das Fahrzustandssignal ein Drehmomentsignal aufweist, das detektiert wird, wenn von dem Lenkrad (4) ein Drehmoment auf eine Lenksäule (5) aufgebracht wird.

3. Servolenkvorrichtung nach einem der Ansprüche 1 oder 2,
**dadurch gekennzeichnet, daß**
das Fahrzustandssignal ein Signal aufweist, das ausgegeben wird, wenn ein vorbestimmter relativer Drehwinkel zwischen einer Eingangsachse (5) auf der Seite des Lenkrads (4) und einer Ausgangsachse (28) auf der Seite der Räder gebildet ist, die durch einen Torsionsstab (27) miteinander verbunden sind.

4. Servolenkvorrichtung nach einem der Ansprüche 1 bis 3,
**dadurch gekennzeichnet, daß**
das Fahrzustandssignal ein Drucksignal aufweist, das im Verhältnis zu dem Druck von Hydraulikfluid ausgegeben wird, die dem Servozylinder (1) bei Detektierung des Drucks zugeführt wird.

## Revendications

1. Dispositif de direction assistée comprenant un vérin d'assistance (1) pour assister la direction en synchronisme avec un volant de direction (4), une pompe à huile (7) pour alimenter le vérin d'assistance (1) en fluide hydraulique afin d'entraîner ledit vérin d'assistance (1), et un moteur (10) pour entraîner ladite pompe à huile (7), comprenant :
des moyens (24) pour émettre un signal d'état de marche correspondant à un état de marche du véhicule prévu dans un mécanisme de direction (2) ;
des moyens de commande (12) pour accepter ledit signal d'état de marche en tant que signal de déclenchement et pour commander la vitesse de rotation ou le nombre de tours dudit moteur (10) en réponse au signal de déclenchement, dans lequel lesdits moyens de commande (12) réalisent la commande, de sorte que la vitesse de rotation ou lé nombre de tours du moteur (10) devient une première vitesse prédéterminée ou premier nombre de tours prédéterminé, qui est relativement basse lorsque la valeur dudit signal d'état de marché alimenté est supérieure à une première valeur de référence et inférieure à une seconde valeur de référence, tout en réalisant la commande, de sorte que la vitesse de rotation ou le nombre de tours du moteur (10) est une seconde vitesse prédéterminée ou second nombre de tours prédéterminé, qui est relativement élevée lorsque la valeur du signal d'état de marche alimenté est supérieure à la seconde valeur de référence ;
ledit signal d'état de marche est un signal dont la valeur varie selon l'état de marche du véhicule,
**caractérisé en ce que** lesdits moyens de commande (12) comprennent au moins un moyen de réglage de valeur de référence (25, 26) pour réaliser la commande de sorte que la vitesse de rotation ou le nombre de tours du moteur (10) devienne une valeur prédéterminée suite à la réception d'un signal d'état de marche dont la valeur est supérieure à une valeur de référence déterminée ;
lesdits moyens de réglage de valeur de référence (25, 26) prévus dans lesdits moyens de commande (12) comprennent des premiers moyens de réglage de valeur de référence (25) dans lesquels une première valeur de référence relativement basse est déterminée et des seconds moyens de réglage de valeur de référence (26) dans lesquels une seconde valeur de référence relativement élevée est déterminée.

2. Dispositif de direction assistée selon la revendication 1, **caractérisé en ce que** ledit signal d'état de marche comprend un signal de couple détecté lorsque le couple est appliqué sur un arbre de direction (5) à partir du volant de direction (4).

3. Dispositif de direction assistée selon l'une des revendications 1 ou 2, **caractérisée en ce que** ledit signal d'état de marche comprend une sortie de signal lorsqu'un angle de rotation relatif prédéterminé est formé entre un axe d'entrée (5) du côté du volant de direction (4) et un axe de sortie (28) du côté des roues qui sont raccordées entre elles par une barre de torsion (27).

4. Dispositif de direction assistée selon l'une quelconque des revendications 1 à 3, **caractérisée en ce que** ledit signal d'état de marche comprend un signal de pression émis proportionnellement à la pression du fluide hydraulique alimenté audit vérin d'assistance (1) suite à la détection de la pression.
